Europäisches Patentamt

European Patent Office

Office européen des brevets

(19)

(11) Veröffentlichungsnummer : **0 390 744 B1**

(12)                    # EUROPÄISCHE PATENTSCHRIFT

(45) Veröffentlichungstag der Patentschrift :
**02.12.92 Patentblatt 92/49**

(51) Int. Cl.$^5$ : **F16L 3/02**

(21) Anmeldenummer : **90810238.7**

(22) Anmeldetag : **26.03.90**

(54) **Vorrichtung zum Befestigen einer Rohrleitung.**

(30) Priorität : **31.03.89 CH 1179/89**

(43) Veröffentlichungstag der Anmeldung :
**03.10.90 Patentblatt 90/40**

(45) Bekanntmachung des Hinweises auf die
Patenterteilung :
**02.12.92 Patentblatt 92/49**

(84) Benannte Vertragsstaaten :
**AT CH DE FR GB IT LI NL**

(56) Entgegenhaltungen :
**EP-A- 0 170 844**
**CH-A- 612 489**
**DE-A- 3 008 510**
**US-A- 4 765 577**

(73) Patentinhaber : **Geberit AG**
**Schachenstrasse 77**
**CH-8645 Jona (CH)**

(72) Erfinder : **Häsler, Heinz**
**Oberseestrasse 90**
**CH-8645 Jona (CH)**
Erfinder : **Gübeli, Albert**
**Bühlstrasse 8**
**CH-8645 Jona (CH)**

(74) Vertreter : **Groner, Manfred et al**
**Patentanwalts-Bureau Isler AG**
**Stampfenbachstrasse 48**
**CH-8006 Zürich (CH)**

EP 0 390 744 B1

**Beschreibung**

Die Erfindung betrifft eine Vorrichtung nach dem Oberbegriff des unabhängigen Patentanspruchs 1.

Bei grossen Stützlängen bestehen bei Rohrleitungen aus Kunststoffrohren die Schwierigkeit, dass diese bei Temperaturänderung starke Längenänderungen erfahren und dadurch verbiegen. Um dies zu vermeiden ist ein Rohraufhängesystem vorgeschlagen worden, bei dem die Rohrleitung auf einem im Querschnitt runden oder quadratischen Träger abgestützt und mit mehreren Rohrschellen und Keilen an diesem Träger fixiert ist.

Durch die US-A-4.765.577 ist eine Vorrichtung bekannt, bei welcher die Rohrleitung in eine U-förmige Aufhängeschale eingesetzt ist. Massnahmen zum Verhindern von thermischen Längenänderungen und daraus resultierenden Rohrverbiegungen sind bei dieser Vorrichtung nicht vorgesehen.

Der Erfindung liegt die Aufgabe zugrunde, eine Vorrichtung der genannten Gattung zu schaffen, die einfach im Aufbau und in der Montage ist und bei welcher Längenänderungen an der Rohrleitung noch wirksamer vermieden werden können. Die Aufgabe ist durch die Erfindung gemäs Anspruch 1 gelöst.

Bei der erfindungsgemässen Vorrichtung sind die Rohrleitung und die geschlossen gedachte Aufhängeschale im wesentlichen koaxial zueinander angeordnet. In Längsrichtung wirkende Kräfte der Rohrleitung können durch die mit der Aufhängeschale Verbundenen Muffen mit einem sehr kurzen Hebelarm aufgenommen werden. Die Aufhängeschale kann entsprechend leicht, beispielsweise aus Metallblech hergestellt sein.

Gemäss einer Weiterbildung der Erfindung weist die Aufhängeschale einen teilkreisförmigen Querschnitt auf und ist somit seitlich offen. Bei einer Montage unterhalb einer Decke kann die Rohrleitung in einfacher Weise beispielsweise von unten in die Aufhängeschale eingesetzt werden. Beziglich der Montage ist es besonders vorteilhaft, wenn die Muffen einen etwa 3/4-teilkreisförmigen Querschnitt aufweisen und somit ebenfalls offen sind und damit von der Seite her auf die Rohrleitung aufgesetzt und gegebenenfalls wieder abgenommen werden können. Vor dem Festlegen der Muffen auf der Rohrleitung kann die letztere in der Aufhängeschale in Längsrichtung verschoben und ausgerichtet werden.

Eine besonders dauerhafte und stabile Befestigung der Muffen an der Rohrleitung ist dann gegeben, wenn diese als Schweissmuffen ausgebildet sind.

Die Fixierung der Muffen in der Aufhängeschale wird in konstruktiv einfacher Weise dadurch gelöst, dass die Aufhängeschale Durchbrüche aufweist, in welche Vorsprünge der Muffen eingreifen.

Dadurch ist eine lösbare Befestigung gegeben, die ermöglicht, noch nicht verschweisste Muffen in einfacher Weise auszuwechseln.

Durch die Weiterbildung nach Anspruch 7 wird für die Rohrleitung in einfacher Weise und zudem sehr montagefreundlich eine Befestigung der Muffen mit der Aufhängeschale geschaffen.

Ein Ausführungsbeispiel der Erfindung wird nachfolgend anhand der Zeichnungen naher erläutert. Es zeigen:

Fig. 1 eine teilweise geschnittene Ansicht eines Teils einer an einer Decke montierten Rohrleitung,

Fig. 2 einen Schnitt durch die Rohrleitung entlang der Linie II-II in Fig. 1,

Fig. 3 eine Seitenansicht einer Schweissmuffe,

Fig. 4 einen Schnitt durch eine Schweissmuffe entlang der Linie IV-IV in Fig. 3,

Fig. 5 eine Ansicht einer gestreckten Schweissmuffe,

Fig. 6 einen Schnitt durch eine Schweissmuffe entlang der Linie VI-VI in Fig. 5, und

Fig. 7 eine Ansicht einer Schweissmuffe gemäss einer Variante.

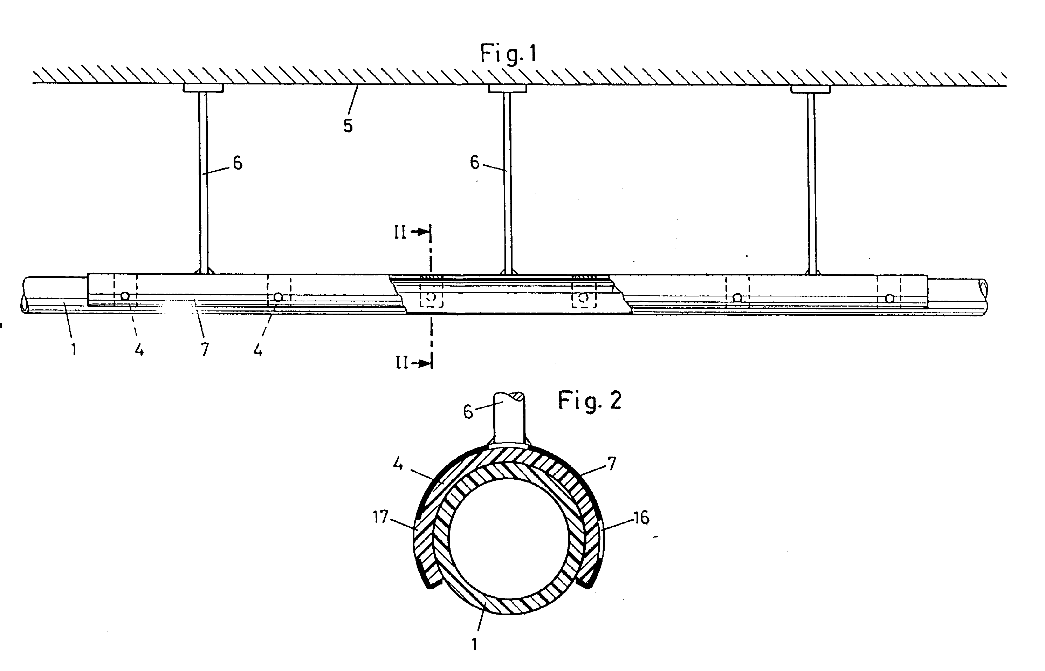

Mit der in den Fig. 1 und 2 gezeigten Befestigungsvorrichtung wird eine Rohrleitung 1 im Abstand und parallel zu einer Deckenwand 5 so befestigt, dass diese auch bei starken Temperaturänderungen nicht durchbiegen kann. Die Leitung 1 besteht in der Regel aus mehreren Leitungsteilen, die beispielsweise in bekannter Weise mit hier nicht gezeigten Schweissmuffen verbunden sind. Die Leitung 1 ist beispielsweise eine Abwasserleitung.

Auf die Rohrleitung 1 sind mehrere im Abstand zueinander angeordnete Schweissmuffen 4 aufgesetzt und mit der Rohrleitung 1 verschweisst. Die Schweissmuffen 4 sind unten offen und können vor dem Verschweissen seitlich in der vorgesehenen Position auf die Rohrleitung 1 aufgesetzt werden. Die Muffen 4 können jedoch auch wie üblich geschlossen sein, und werden dann von einem Ende auf die Rohrleitung 1 aufgeschoben.

Die Rohrleitung 1 und die Muffen 4 sind wie gezeigt in eine Aufhängeschale 7, beispielsweise aus Metallblech, eingesetzt. Die Schweissmuffen 4 sind so mit der Aufhängeschale 7 verbunden, dass diese in Längsrichtung der Aufhängeschale 7 nicht verschoben werden können. Dazu sind in der Aufhängeschale 7 wie in Fig. 2 gezeigt Durchbrüche 16 vorgesehen, in welche Vorsprünge 17 der Schweissmuffe 4 eingreifen. Die Vorsprünge 17 können, beispielsweise durch Verdickungen am freien Ende, so ausgebildet sein, dass sie in den Durchbrüchen 16 eingerastet sind. Nach einer hier nicht gezeigten Ausführung weist die Muffe auf ihrer Aussenseite eine umlaufende Rille auf, in die ein teilkreisförmiger Ring eingesetzt ist, der seinerseits an der Innenseite der Aufhängeschale 7 befestigt, beispielsweise angeschraubt ist. Es sind noch andere Befestigungen denkbar, wobei es hier wichtig ist, dass auch bei starken Dehnungskräften die Muffen 4 bezüglich der Aufhängeschale 7 in deren Längsrichtung nicht verschoben werden können. Ein wesentlicher Aspekt der Erfindung wird darin gesehen, dass die Rohrleitung 1 vor dem Verschweissen der Muffen 4 in Längsrichtung verschoben werden kann. Dies erleichtert den Anschluss weiterer Leitungsteile erheblich.

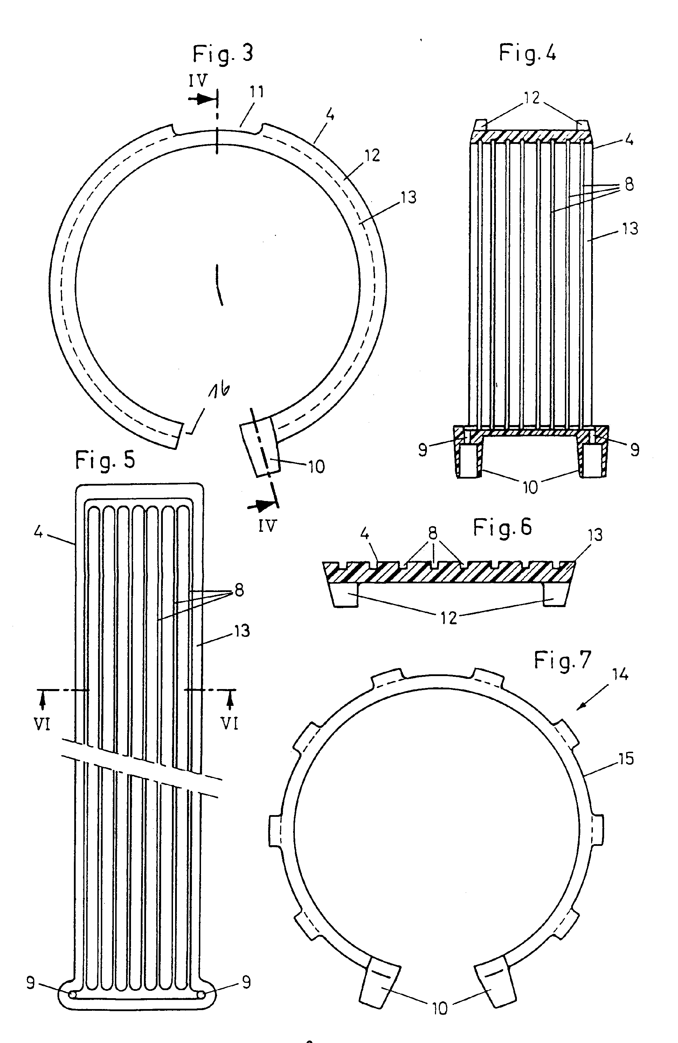

In den Fig. 3 bis 5 ist eine Schweiss- oder Elektromuffe näher dargestellt. Diese besteht aus einem Körper 12 aus einem Thermoplast, der auf der Innenseite Rillen 8 aufweist, in die in bekannter Weise ein hier nicht gezeigter Schweissdraht angelegt ist, dessen Enden an Oeffnungen 9 nach Aussen geführt sind. Die Schweissmuffe 4 wird an den in Fig. 4 gezeigten Anschlusstellen 10 mit einer elektrischen Quelle verbunden und in an sich bekannter Weise erwärmt.

Die Schweissmuffe 4 weist eine Oeffnung 16 auf, die durch auseinanderdrücken der Enden mit geringen Kräften vergrössert werden kann. Dies wird durch eine Ausnehmung auf der Rückseite der Schweissmuffe 4 erleichtert. Damit kann die Schweissmuffe 4 ohne Werkzeuge in einfacher Weise seitlich auf die Rohrleitung 1 aufgesetzt werden. Damit die Schweissmuffe 4 beim Schweissvorgang gut auf der Aussenseite der Rohrleitung 1 anliegt, kann eine hier nicht gezeigte Klammer vorgesehen sein, welche die Schweissmuffe 4 an die Rohrleitung drückt. Die Muffen 4 dienen hier wie ersichtlich nicht zum Verbinden von zwei Rohrenden, sondern um die Rohrleitung 1 an der Aufhängeschale 7 zu fixieren. Bei der in den Fig. 3 bis 6 gezeigten Ausführung verlaufen die Rillen 8 parallel zu einem sich in Umfangsrichtung erstreckenden Rand 13. Denkbar ist hier jedoch auch eine Ausführung, bei welcher die Rillen 8 hauptsächlich quer zum Rand 13 verlaufen.

In der Ausführung gemäss Fig. 7 sind auf der Rückseite einer Schweissmuffe 14 mehrere Ausnehmungen 15 vorgesehen. Dies hat den Vorteil, dass diese Muffe 14 wesentlich flexibler ist und beispielsweise auch an runde Rohre angelegt werden kann.

Aus den obigen Ausführungen ergibt sich somit eine Vorrichtung, die ersichtlich mit verhältnismässig wenigen, einfachen und robusten Bauteilen realisierbar ist. Erfindungsgemäss wurde damit eine Vorrichtung geschaffen, die nicht nur den sanitärtechnischen Anforderungen einschliesslich einer einfachen Montage in hervorragender Weise Rechnung trägt, sondern aufgrund ihrer einfachen und robusten Ausführbarkeit zudem kostenmässig günstig und auch auf Dauer betrieblich äusserst zuverlässig ist.

**Patentansprüche**

1. Vorrichtung zum Befestigen einer Rohrleitung, insbesondere einer Wasserleitung, an einer Gebäudewand (5), mit mehreren Trägern (6), mit denen die Rohrleitung (1) an der Gebäudewand (5) zu befestigen ist, wobei die Rohrleitung (1) in eine Aufhängeschale (7) eingesetzt ist, gekennzeichnet durch wenigstens zwei ebenfalls in die Aufhängeschale (7) eingesetzte und im Abstand zueinander angeordnete Muffen (4) welche die Rohrleitung (1) mit der Aufhängeschale (7) verbinden, derart, dass die Muffen (4) Fixpunkte bilden, die thermische Längenänderungen der Rohrleitung (1) verhindern.

2. Vorrichtung nach Anspruch 1, dadurch gekennzeichnet, dass die Aufhängeschale (7) einen teilkreiförmigen Querschnitt aufweist.

3. Vorrichtung nach Anspruch 1 oder 2, dadurch gekennzeichnet, dass die Muffen (4) einen etwa 3/4-teilkreisförmigen Querschnitt aufweisen.

4. Vorrichtung nach einem der Ansprüche 1 bis 3, dadurch gekennzeichnet, dass die Muffen (4) Schweissmuffen sind.

5. Vorrichtung nach einem der Ansprüche 1 bis 4, dadurch gekennzeichnet, dass die Aufhängeschalen (7) Durchbrüche (16) aufweisen, in welche Vorsprünge (17) der muffen (4) zu ihrer Fixierung eingreifen.

6. Vorrichtung nach einem der Ansprüche 1 bis 5, dadurch gekennzeichnet, dass die Muffen (4) lösbar von unten in die Aufhängeschale (7) eingesetzt sind.

7. Vorrichtung nach einem der Ansprüche 1 bis 6, dadurch gekennzeichnet, dass die Muffen (4) auf der Aussenseite eine in Umfangsrichtung sich erstreckende Rille aufweisen und dass in die Rillen je ein teilkreisförmiger Ring eingesetzt ist, der auf der Innenseite der Aufhängeschale (7) befestigt, beispielsweise angeschraubt ist.

**Claims**

1. Device for fastening a pipe, in particular a water pipe, to a building wall (5), comprising several supporting beams (6), with which the pipe (1) is to be fastened to the building wall (5), whereby the pipe (1) is mounted into a suspension shell (7), characterized in that at least two sleeves (4) are also mounted into the suspension shell (7) and arranged therein in a distance in relation to each other, thus connecting the pipe (1) with the suspension shell (7) in such a way that the sleeves (4) are forming fixed points which prevent thermic longitudinal deformations of the pipe (1).

2. Device according to Claim 1, characterised in that the suspension shell (7) has a partially circular cross section.

3. Device according to Claim 1 or 2, characterised in that the sleeves (4) have an approximately 3/4 circular cross section.

4. Device according to one of Claims 1 to 3, characterised in that the sleeves (4) are welding sleeves.

5. Device according to one of Claims 1 to 4, characterised in that the suspension shell (7) has openings (16), to receive projections (17) of the sleeves (4) for the fixation of the latter.

6. Device according to one of Claims 1 to 5, characterised in that the sleeves (4) are detachably mounted into the suspension shell (7) from below.

7. Device according to one of Claims 1 to 6, characterised in that the sleeves (4) have grooves on the outer surface extending in circumferential direction, and that in each groove is inserted a partially circular ring, which is attached on the inner surface of the suspension shell (7), for example by means of screws.

**Revendications**

1. Dispositif pour la fixation d'une conduite, en particulier d'une conduite d'eau, au mur d'un bâtiment (5), comportant plusieurs poutrelles (6), avec lesquelles la conduite (1) doit être fixée au mur du bâtiment, ladite conduite (1) étant insérée dans une enveloppe de suspension (7), caractérisé par: au moins deux manchons (4) qui sont également insérés, l'un à une distance par rapport à l'autre, dans l'enveloppe de suspension (7) tout en reliant la conduite (1) avec l'enveloppe de suspension (7), de sorte que les manchons (4) forment des points fixes qui empêchent un changement de longueur thermique de la conduite (1).

2. Dispositif suivant la revendication 1, dans lequel ladite enveloppe de suspension (7) présente une section circulaire partielle.

3. Dispositif suivant la revendication 1 ou 2, dans lequel les manchons (4) présentent une section circulaire partielle d'environ trois quarts.

4. Dispositif suivant l'une des revendications 1 à 3, dans lequel les manchons (4) sont des manchons à souder.

5. Dispositif suivant l'une des revendications 1 à 4, dans lequel les enveloppes de suspension (7) comportent des entaillures (16), dans lesquelles les tenons (17) des manchons (4) s'engrennent pour la fixation de ces derniers.

6. Dispositif suivant l'une des revendications 1 à 5, dans lequel les manchons (4) sont insérés dans l'enveloppe de suspension (7) d'en bas et de manière détachable.

7. Dispositif suivant l'une des revendications 1 à 6, dans lequel les manchons (4) comportent sur leur surface extérieure des rainures s'étendant dans la direction circonférentielle, et dans chaque rainure est inséré un anneau, ayant une section circulaire partielle, qui est attaché à la surface intérieure de l'enveloppe de suspension (7), par exemple au moyen de vis.

EP 0 390 744 B1

Fig.1

Fig.2

5

Fig. 3

Fig. 4

Fig. 5

Fig. 6

Fig. 7